# EUROPEAN PATENT APPLICATION

(11) **EP 0 644 075 A1**
(43) Date of publication of application: **22.03.1995**
(21) Application number: 94306903.9
(22) Date of filing: 21.09.1994
(51) Int. Cl.: B60J 7/00, E06B 9/40

(54) **Sun blind**

(30) Priority: 21.09.1993 GB 9319430
(71) Applicant: MIRLE INTERNATIONAL LIMITED, Hitchin, Hertfordshire SG5 1AL (GB)
(72) Inventor: Scott, Michael Wayne, Stevenage, Hertfordshire SG1 5NN (GB); Dodson, Patrick Stephen, St. Neots, Cambridgeshire PE19 1PY (GB)
(74) Representative: W.P. THOMPSON & CO.

(57) **Abstract**

A blind unit for a glazed area, especially the sun roof of a motor vehicle, comprises a cover member (26) which can be moved to any desired setting between extended and retracted limit positions. The cover member (26) is maintained in spring-loaded equilibrium throughout the course of its travel by the provision of a tensioning mechanism at each side of the cover member. Each tensioning mechanism comprises a flexible strap (32a, 32b) which runs from a roller tube (20), around a spring-biassed movable bobbin (34a, 34b), and back to a support tube (28) at the leading edge of the cover member. The springs for the bobbins (34a, 34b) are housed within guide tubes (16a, 16b) at each side of the unit.

## Description

This invention relates generally to blinds and is particularly concerned with blinds which are intended for use in vehicles, for use in conjunction with glazed areas, especially in the roof and sides of a vehicle. The term "glazed" is intended to include not just glass areas but also areas of transparent or translucent plastics material.

There is a need in motor vehicles for sun blinds to be used in conjunction with glazed roof areas, in particular for screening purposes. Conventional sun blinds suffer from a number of disadvantages. The conventional blind for use in a vehicle comprises a spring-loaded roller blind which is secured by a latch mechanism. When the latch mechanism is released the blind retracts automatically to its housed position. With such blinds it is not possible to position the blind in an intermediate position: the blind is either fully extended or fully retracted. Also, the use of a latch normally requires a knob or handle projecting into the interior of the vehicle, and this can be a safety hazard. Also, it is not always easy for the user to operate the latch, particularly if it is to be operated by the driver while driving. In certain vehicles, with a wide glazed roof area, two separate blinds are used, in side-by-side relationship, with a central gap between them. This central gap is necessary in order to accommodate the winding mechanism for the sun roof which intrudes into the vehicle cabin. Compatibility of a vehicle sun blind with the winding mechanism for the sun roof is a problem in many vehicles.

It is an object of the present invention to provide an improved blind unit for use in conjunction with a glazed area, especially within a vehicle, which overcomes or at least minimises the disadvantages set out above.

It is a further object to provide a blind unit which will accommodate a wide range of temperatures and still function satisfactorily. A temperature range of -40°C to +50°C must be withstood. The problem is that the housing expands and contracts differently from the adjacent steel components. The blind unit must adapt to this.

In accordance with the present invention there is provided a blind unit for a glazed area, comprising a cover member which can be moved to any desired setting between extended and retracted limit positions, characterised in that tensioning means are provided which maintain the cover member in spring-loaded equilibrium throughout the course of its travel between the said limit positions.

In this way the cover member can be drawn out to any desired extent and will remain in that position in a taut condition without sagging, with freedom to extend it further or to retract it as desired.

With this arrangement, in order to extend the cover member, it is only necessary simply to pull the leading edge of the cover member in the direction to extend it. It is not necessary to provide a separate actuating member which is connected to the cover member by movable pull cords.

One presently preferred embodiment of sun blind unit in accordance with the invention, for use in association with a glazed panel of a vehicle, will now be described by way of example and with reference to the accompanying drawings.

In the drawings:
Fig. 1 is a schematic view of a sun blind unit in accordance with the invention, the view being of the underside of the blind unit;
Fig. 2 is a schematic partial view, partly in section, of the guide tube tension mechanism of the sun blind unit of Fig. 1; and,
Fig. 3 is a schematic view, taken generally along the line III-III in Fig. 1, to illustrate the run of the tensioner straps.

As shown in the drawings the blind unit is fitted to screen a generally rectangular aperture 10 in a housing 12 of plastics material. The housing 12 is preferably a moulded shell, of shallow dished shape, and serves to provide a support for the components of the blind unit. The housing is mounted in the vehicle below a glazed panel, e.g. roof panel (not shown).

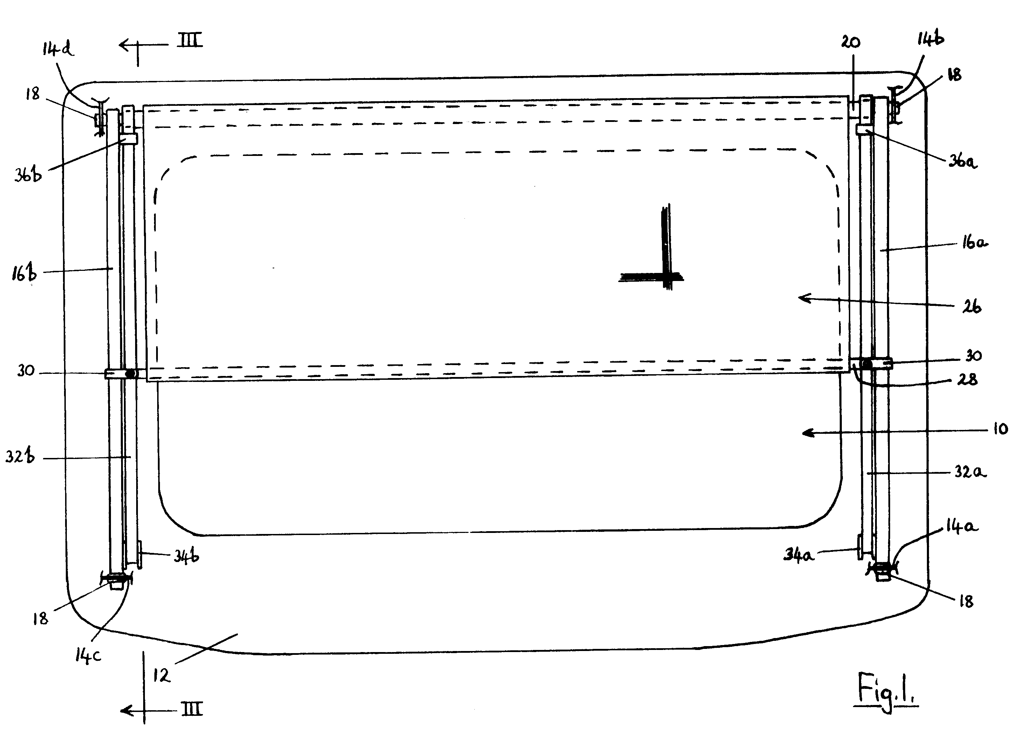

The blind unit is mounted fixedly within the concavity of the housing 12 and is supported therefrom by being secured to thin webs 14a, 14b, 14c, 14d of plastics material which project from the housing shell. These webs are only partially shown in Fig. 1.

The blind unit comprises two parallel guide tubes 16a, 16b which have a length dimension greater than the shorter dimension of the aperture 10, hereinafter referred to as the length of the aperture. The guide tubes are mounted at one end in apertures in webs 14a and 14c, within rubber washers 18 which help to decouple the unit acoustically from the housing.

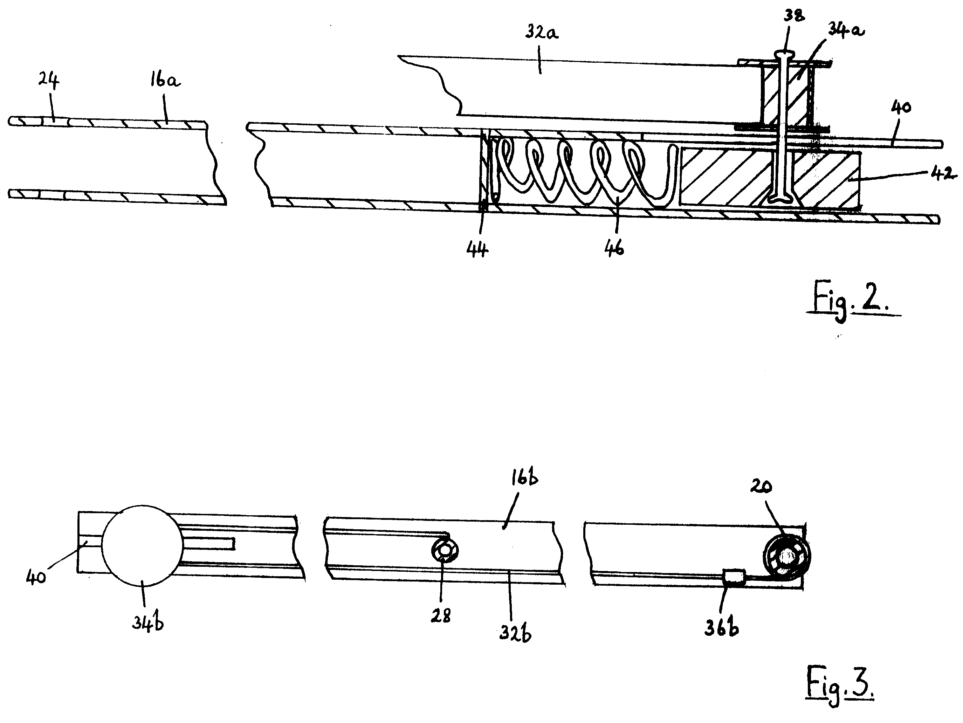

At the other end of the blind unit is provided a roller tube 20 which extends perpendicular to the guide tubes. At each end the roller tube 20 has a stub shaft. The stub shafts are seated within holes in the webs 14b and 14d respectively, again with the use of rubber washers 18. The stub shafts pass through holes 24 (Fig. 2) in the guide tubes 16a, 16b adjacent to their ends. This provides a fixed position mounting for this end of the guide tubes.

The roller tube 20 anchors the trailing edge of a cover member 26 which can be made of any suitable fabric or plastics material, for example in the form of netting. The cover member 26 can be rolled onto and unrolled from the roller tube 20, which rotates during such rolling. The leading edge of the cover member 26 is secured to an elongate rigid support tube 28 which can be grasped by the user and used to draw the cover member back and forth across the aperture 10. The width of the cover member 26 is slightly greater than the width of the aperture 10. At each end the support tube 28 is fixed to a guide 30 which is looped around the respective guide tube 16a, 16b, in order to guide and support the ends of the support tube in its traverse across the aperture.

At each side of the blind unit, between the guide tube 16a, 16b and the adjacent edge of cover member 26, is positioned a tensioner strap 32a, 32b. These straps are preferably of nylon or like material and are flexible. Each strap is anchored at one end to the respective end portion of the support tube 28. From there it travels around a bobbin 34a, 34b and back to the roller tube 20 to which it is also anchored and around which it is adapted to be rolled. This is illustrated in Fig. 3. A strap guide 36a, 36b is provided for each strap 32a, 32b adjacent to the roller tube and is fixed to the respective guide tube 16a, 16b.

The straps 32a, 32b are tensioned by a tension mechanism in each guide tube 16a, 16b. This is shown most clearly in Fig. 2. Each bobbin 34a, 34b has a metal rivet 38 therethrough which extends from one side of the bobbin and into a slot 40 in the adjacent hollow guide tube. Within the guide tube is a cylindrical nylon plunger 42 in which and to which the end of the rivet 38 is fixed. Fixed within the guide tube on the side of the plunger 42 towards the centre of the blind unit is a spiral pin 44 which extends across the diameter of the tube and which acts as a seat for one end of a compression spring 46 which is seated at its other end against the adjacent end face of the plunger 42. The plunger 42 is therefore biassed towards the outer end of the guide tube, thereby maintaining tension in the associated strap 32a,32b. The slots 40 in the guide tubes 16a, 16b are of sufficient length to permit the bobbins 34a, 34b to travel during the rolling and unrolling of the straps and also to permit adjustment of the strap length. Also, and of particular importance, the slots 40 allow for movement of the side straps arising from changes in temperature.

By virtue of the construction of the unit the cover member 26 is maintained taut but in a state of equilibrium, in any position in which it is placed. The tension mechanisms on each side of the unit maintain the necessary tension for this as the cover member is moved back and forth. In setting up the unit the straps are fixed at a length so that the springs 46 take up the slack with the cover member extended midway between its two limit positions.

In an alternative embodiment, the bobbins 34a, 34b which act as tensioners are fixed, not movable, and tension is applied at the other end of the unit, for example by the use of springs at the roller tube. This may be desirable if space is limited.

Although straps are used in the embodiment described above, other alternative linkages may be provided, for example cords or wires.

It will be appreciated that the blind unit of the present invention is robust and easy to assemble. Also, the parts of the unit do not have to be assembled with any great degree of precision.

## Claims

1. A blind unit for a glazed area, comprising a cover member (26) which can be moved to any desired setting between extended and retracted limit positions, characterised in that tensioning means (32a, 32b, 34a, 34b, 46) are provided which maintain the cover member (26) in spring-loaded equilibrium throughout the course of its travel between the said limit positions.

2. A blind unit as claimed in claim 1, characterised in that the tensioning means comprises a linkage (32a, 32b) on each side of the cover member (26) between an elongate roller (20) on which the cover member is wound at the one end and means (28) supporting the leading edge of the cover member at the other end, with spring means (46) to maintain tension in the linkages.

3. A blind unit as claimed in claim 2, characterised in that the linkages comprise flexible straps (32a, 32b).

4. A blind unit as claimed in claim 2 or 3, characterised in that a guide tube (16a, 16b) is provided adjacent to and parallel to each side of the cover member (26), the spring means (46) is housed within the respective guide tubes, and each spring means acts through a bobbin (34a, 34b) movable lengthwise of the guide tube to maintain said tension.

5. A blind unit as claimed in claim 4, characterised in that each guide tube has a slot (40) therein, each bobbin (34a, 34b) has an extension (38) projecting into the adjacent slot, a plunger (42) within the guide tube is secured to the extension (38), and a compression spring (46) acts on the plunger (42).

6. A blind unit as claimed in any of claims 2 to 5, characterised in that the elongate roller (20) is at one end of the unit, the spring means (46) is at the other end of the unit, and the linkages (32a, 32b) run from the roller (20) to the spring means (46) and back to the means (28) supporting the leading edge of the cover member.

7. A blind unit as claimed in claim 4 or 5, characterised in that the guide tubes (16a, 16b) provide support both for the elongate roller (20) on which the cover member (26) is wound and also for a support tube (28) fixed to the leading edge of the cover member.
